# EUROPEAN PATENT APPLICATION

(11) **EP 4 645 656 A1**
(43) Date of publication of application: **05.11.2025**
(21) Application number: 23912057.9
(22) Date of filing: 25.12.2023
(51) Int. Cl.: H02K 15/02, H02K 5/08, H02K 5/22

(54) **TERMINAL POSITIONING JIG AND STATOR MOLDING DEVICE**

(30) Priority: 28.12.2022 JP 2022212375
(71) Applicant: NHK Spring Co., Ltd., Kanagawa 236-0004 (JP)
(72) Inventor: NISHIKATA, Yuto, Yokohama-shi, Kanagawa 236-0004 (JP)
(74) Representative: DREISS Patentanwälte PartG mbB
(86) International application number: PCT/JP2023/046428
(87) International publication number: WO 2024/143278

(57) **Abstract**

A terminal positioning jig that easily secures positional accuracy of an external connection terminal of a stator is provided. A terminal positioning jig (50) is attached to a mold (40) for resin molding a stator (12) that includes a stator core (14), a coil (16), and a bus bar unit (18). The terminal positioning jig (50) has a terminal positioning portion (60) that comes into contact with plural terminal portions (24) included in the bus bar unit (18) and that positions the plural terminal portions (24) with respect to the mold (40).

## Description

### Technical Field

The present disclosure relates to a terminal positioning jig to be attached to a mold for molding a stator with resin, and a stator molding device including the terminal positioning jig.

### Background Art

Japanese Patent Application Laid-Open (JP-A) No. 2010-75010 discloses a terminal structure of a rotating electric machine in which a resin molded part is formed by resin molding of a coil end and a terminal portion integrated with the resin molded part is provided. In the terminal structure of the rotating electric machine, the terminal portion includes a resin terminal plate that holds a metal terminal to be connected to the outside. During resin molding, the terminal is positioned in the mold by holding the terminal plate with a pin or the like provided in the mold.

### SUMMARY OF INVENTION

### Technical Problem

However, the resin terminal plate is deformed due to a resin temperature and a resin pressure during resin molding, heating when the resin is cured, a load from the mold, and the like, and it is thus difficult to sufficiently prevent deterioration of positional accuracy of the metal terminal (that is, the external connection terminal) after resin molding.

In view of this fact, an object of the present disclosure is to provide a terminal positioning jig and a stator molding device that easily secure positional accuracy of an external connection terminal of a stator.

### Solution to Problem

A terminal positioning jig according to a first aspect is a terminal positioning jig to be attached to a mold for resin molding a stator that includes a stator core, a coil wound around a tooth of the stator core, and a bus bar unit including a plurality of bus bars electrically connected to the coil, the terminal positioning jig including a terminal positioning portion that comes into contact with an external connection terminal included in the bus bar unit and that positions the external connection terminal with respect to the mold.

In the first aspect, the terminal positioning jig is attached to the mold for resin molding of the stator including the stator core, the coil, and the bus bar unit. The terminal positioning jig has the terminal positioning portion that comes into contact with the external connection terminal included in the bus bar unit and positions the external connection terminal with respect to the mold. In this manner, since the terminal positioning portion of the terminal positioning jig attached to the mold comes into direct contact with the external connection terminal, it is easy to secure the positional accuracy of the external connection terminal, as compared with a configuration in which the external connection terminal is positioned in the mold via a resin component.

A terminal positioning jig according to a second aspect includes, in the first aspect, a jig body that is disposed at a radial direction outer side with respect to the stator, and a terminal pushing portion that is fixed to the jig body in an axial direction of the stator, in which the terminal positioning portion is configured to sandwich the external connection terminal between the jig body and the terminal pushing portion.

In the terminal positioning jig of the second aspect, the jig body is disposed outside the stator in the radial direction, and the terminal pushing portion is fixed to the jig body in the axial direction of the stator. In the terminal positioning portion included in the terminal positioning jig, since the external connection terminal is sandwiched between the jig body and the terminal pushing portion, the external connection terminal can be positioned with high accuracy in the axial direction of the stator.

In a terminal positioning jig according to a third aspect, in the first aspect or the second aspect, the terminal positioning portion is formed in at least one of the jig body or the terminal pushing portion and has a recess into which the external connection terminal is inserted in the axial direction of the stator.

In the terminal positioning jig of the third aspect, the terminal positioning portion has the recess formed in at least one of the jig body or the terminal pushing portion. The external connection terminal is inserted into the recess in the axial direction of the stator. This allows the external connection terminal to be positioned, for example, in a circumferential direction of the stator.

In any one of the first to third aspects, a terminal positioning jig according to a fourth aspect is detachable from the mold.

According to the fourth aspect, since the terminal positioning jig can be detached from the mold, for example, the stator can be mounted on and removed from the terminal positioning jig, and so forth, while the terminal positioning jig is in a detached state from the mold, and the workability is improved.

A stator molding device according to a fifth aspect is a stator molding device intended for resin molding a stator that includes a stator core, a coil wound around a tooth of the stator core, and a bus bar unit configured by integrating, with a resin, a plurality of bus bars electrically connected to the coil, the stator molding device including: a mold; and a terminal positioning jig according to any one of the first to fourth aspects to be attached to the mold.

In the stator molding device of the fifth aspect, the stator including the stator core, the coil, and the bus bar unit is molded with resin. The stator molding device includes the mold and the terminal positioning jig to be attached to the mold. The terminal positioning jig is according to any one of the first to fourth aspects and thus obtains the above-described effects. Advantageous Effects of Invention

As described above, in the terminal positioning jig and the stator molding device according to the disclosure, it is easy to secure the positional accuracy of the external connection terminal of the stator.

### BRIEF DESCRIPTION OF DRAWINGS

Fig. 1 is a perspective view illustrating a stator molding device and a stator according to an embodiment.
Fig. 2 is a perspective view illustrating the stator according to the embodiment.
Fig. 3 is a perspective view illustrating a state of the stator according to the embodiment before resin molding.
Fig. 4 is a perspective view illustrating a state in the middle of mounting the stator on a terminal positioning jig according to the embodiment.
Fig. 5 is a perspective view illustrating a state of the stator completely mounted on the terminal positioning jig according to the embodiment.
Fig. 6 is a side view illustrating a state in the middle of mounting the stator on the terminal positioning jig according to the embodiment.
Fig. 7 is a plan view illustrating a part of the configuration illustrated in Fig. 6 when viewed from the axial direction of the stator.

### DESCRIPTION OF EMBODIMENTS

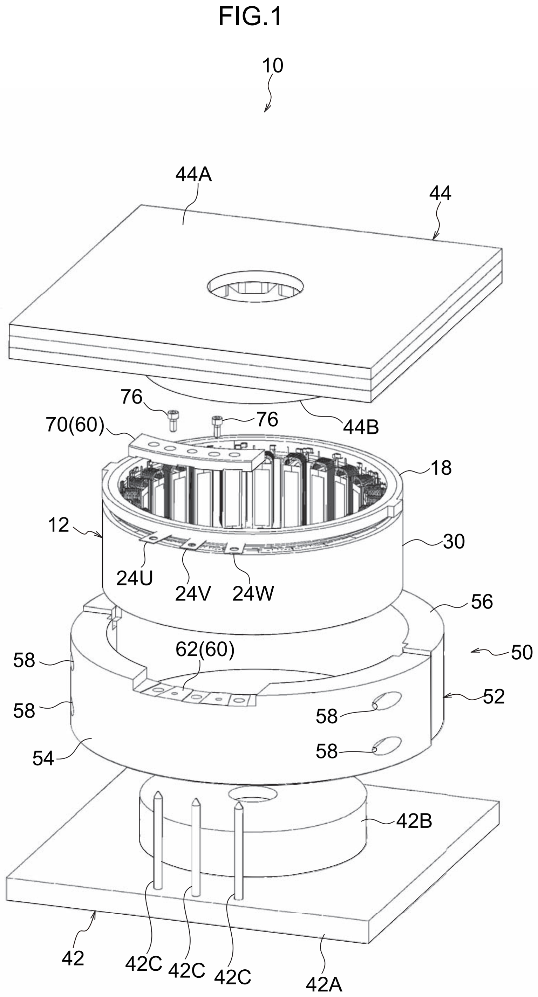

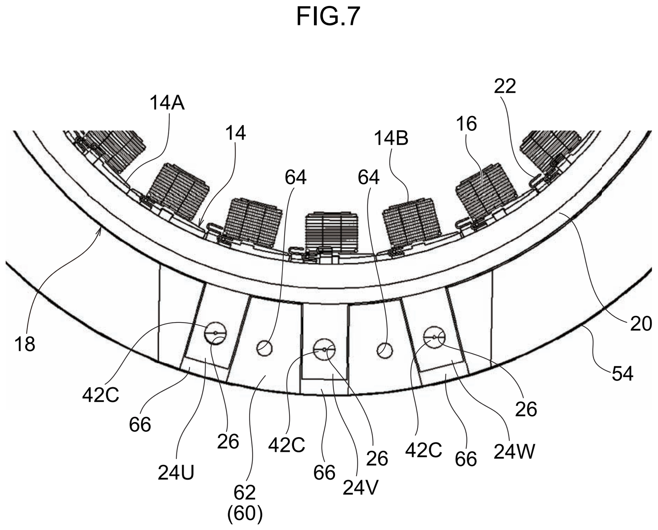

Hereinafter, a stator molding device 10 according to an embodiment of the disclosure will be described with reference to Figs. 1 to 7. In each drawing, some reference signs will be sometimes omitted in order to make the drawing easy to see.

As illustrated in Fig. 1, the stator molding device 10 according to the present embodiment is a device intended for resin molding a stator 12 and includes a mold 40 having a lower mold 42 and an upper mold 44, and a terminal positioning jig 50 to be attached to the mold 40.

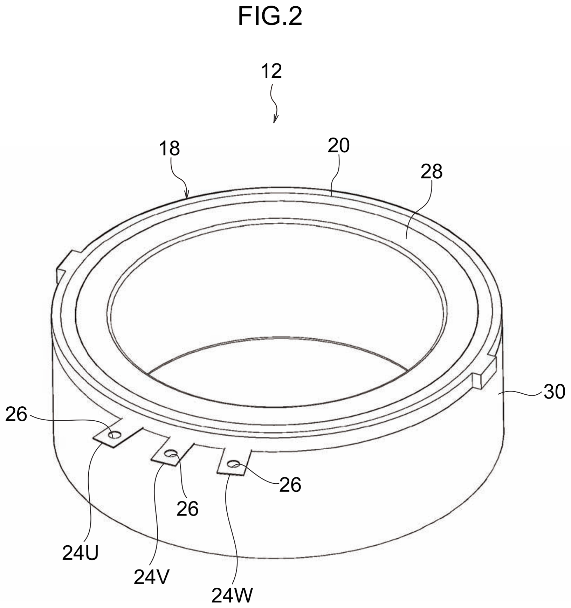

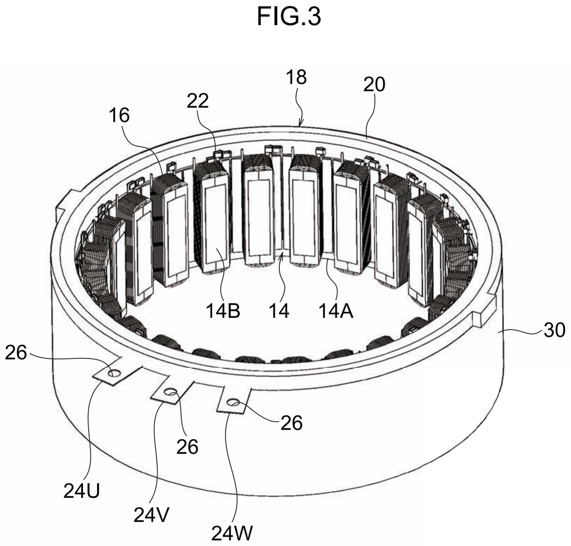

As illustrated in Figs. 2 and 3, the stator 12 is an armature including a stator core 14, a plurality of coils 16, an insulator (not illustrated), a bus bar unit 18, and a sealing resin 28. The stator core 14, the plurality of coils 16, the insulator, the bus bar unit 18, and the sealing resin 28 are accommodated in a cylindrical case 30. A rotor (not illustrated) is disposed inside the stator 12 to configure an inner rotor type motor (rotating electric machine). The motor is, for example, a three-phase motor and is a resin molded motor in which the stator core 14, the plurality of coils 16, the insulator, and the bus bar unit 18 are sealed with the sealing resin 28.

The stator core 14 is configured by layering a plurality of iron core pieces made of electromagnetic steel sheets. The stator core 14 is formed in an annular shape and includes a yoke 14A and a plurality of (here, 24) teeth 14B. The stator core 14 may be divided into a plurality of parts in a circumferential direction. The yoke 14A has a cylindrical shape. The plurality of teeth 14B is formed to protrude from an inner peripheral surface of the yoke 14A toward an inside of the stator core 14 in a radial direction. The plurality of teeth 14B is formed side by side at equal intervals in the circumferential direction of the stator core 14, and slots (a reference sign is omitted) are formed between every two of the plurality of teeth 14B. The stator 12 fits inside the case 30. The number of poles and the number of slots of the stator 12 illustrated in Fig. 3 are merely examples and are not limited the illustrated examples. The case 30 will not necessarily be provided as a constituent element depending on the specifications of the motor.

The plurality of coils 16 is each spirally wound around one of the plurality of teeth 14B. The insulator is interposed between each coil 16 and each tooth 14B. In one configuration, an insulating material such as insulating paper or varnish, instead of the insulator, may be interposed between each coil 16 and relevant one of the tooth 14B. Each coil 16 has a configuration in which an element wire made of, for example, copper, aluminum, silver, or any alloy wire material thereof is coated with an insulating material such as enamel. Although the element wire is assumed here to be a round wire, the element wire may be a flat wire, a hexagonal wire, or the like. The coil 16 is wound in a substantially long rectangular shape whose longitudinal direction matches an axial line direction of the stator core 14 when viewed from the radial direction of the stator core 14.

The plurality of coils 16 is configured with a plurality of (here, eight) U-phase coils, a plurality of (here, eight) V-phase coils, and a plurality of (here, eight) W-phase coils. The U-phase coil, the V-phase coil, and the W-phase coil are sequentially arranged in this order along the circumferential direction of the stator core 14. The U-phase coils, the V-phase coils, and the W-phase coils are separately mounted on the teeth 14B of the stator core 14 at intervals for each phase in the circumferential direction of the stator core 14. The immediately neighboring coils 16 of the same phase (the same phase among the U-phase, V-phase, and W-phase) are electrically connected to each other by the bus bar unit 18.

The bus bar unit 18 is disposed adjacent to one side of the stator core 14 in the axial line direction. The bus bar unit 18 is configured with a U-phase bus bar, a V-phase bus bar, a W-phase bus bar (all not illustrated), and an insulating resin 20. The U-phase bus bar, the V-phase bus bar, and the W-phase bus bar correspond to a "plurality of bus bars" in the disclosure, and the insulating resin 20 corresponds to "resin" in the disclosure. The U-phase bus bar, the V-phase bus bar, and the W-phase bus bar are manufactured by press molding of a metal sheet, as an example. Each of the U-phase bus bar, the V-phase bus bar, and the W-phase bus bar annularly extends in the circumferential direction of the stator core 14 along the yoke 14A. The insulating resin 20 has a ring shape and covers the U-phase bus bar, the V-phase bus bar, and the W-phase bus bar.

The U-phase bus bar, the V-phase bus bar, and the W-phase bus bar have a plurality of coil connection portions 22 sticking inward of the stator core 14 in the radial direction and exposed to the outside of the insulating resin 20. The plurality of coil connection portions 22 projects out to a root side of each of the teeth 14B and is electrically connected to one of the U-phase coil, the V-phase coil, and the W-phase coil. The U-phase bus bar, the V-phase bus bar, and the W-phase bus bar have a U-phase terminal portion 24U, a V-phase terminal portion 24V, and a W-phase terminal portion 24W sticking inward of the stator core 14 in the radial direction and exposed to the outside of the insulating resin 20. A bolt hole 26 is formed in each of the U-phase terminal portion 24U, the V-phase terminal portion 24V, and the W-phase terminal portion 24W. The U-phase terminal portion 24U, the V-phase terminal portion 24V, and the W-phase terminal portion 24W correspond to "external connection terminals" in the disclosure. The U-phase terminal portion 24U, the V-phase terminal portion 24V, and the W-phase terminal portion 24W are connected to a three-phase power supply, whereby the stator 12 having the above configuration functions as a stator of a three-phase motor. Hereinafter, the U-phase terminal portion 24U, the V-phase terminal portion 24V, and the W-phase terminal portion 24W will be referred to as a "plurality of terminal portions 24".

The sealing resin 28 is a molding resin that seals the stator core 14, the plurality of coils 16, the insulator, and the bus bar unit 18. The sealing resin 28 is obtained by kneading a nonmagnetic powder as a filler with a thermosetting resin such as an epoxy resin, a thermoplastic resin, or the like, for example, and has thermal conductivity and insulating properties. The sealing resin 28 may be configured to have higher thermal conductivity than the insulating resin 20 and has a cylindrical outer shape.

As described earlier, the stator molding device 10 for molding the sealing resin 28 includes the mold 40 and the terminal positioning jig 50. The lower mold 42 of the mold 40 includes a rectangular sheet-shaped base portion 42A, a columnar core portion 42B formed on an upper surface of the base portion 42A, and a plurality of positioning pins 42C erected on the upper surface of the base portion 42A on an outer side of the core portion 42B in the radial direction. The core portion 42B has a columnar shape whose axial direction matches a sheet thickness direction of the base portion 42A. The plurality of positioning pins 42C each has a columnar shape whose axial direction matches the sheet thickness direction of the base portion 42A and is disposed side by side in the circumferential direction of the core portion 42B. The plurality of positioning pins 42C may be provided in the upper mold 44.

The upper mold 44 of the mold 40 has a columnar core portion 44B formed on the upper surface of the base portion 44A. A flow path for molding resin is formed in the base portion 44A. The core portion 44B has a columnar shape whose axial direction matches the sheet thickness direction of the base portion 44A and is disposed coaxially with the core portion 42B of the lower mold 42. When the stator 12 is molded with resin with the mold 40, the stator 12 before resin molding is held sandwiched between the base portion 42A of the lower mold 42 and the base portion 44A of the upper mold 44, and the core portion 42B and the core portion 44B are inserted inside the stator 12. In this state, a gap between the core portion 42B, the core portion 44B, and the stator 12 is filled with a molding resin from the flow path in the base portion 44A. This resin molding is performed while the stator 12 is in a mounted state on the terminal positioning jig 50.

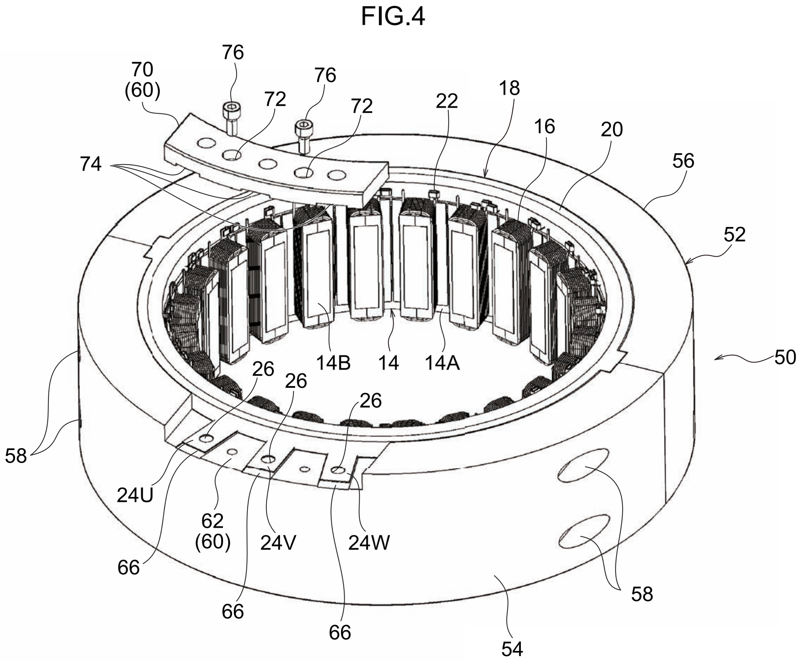

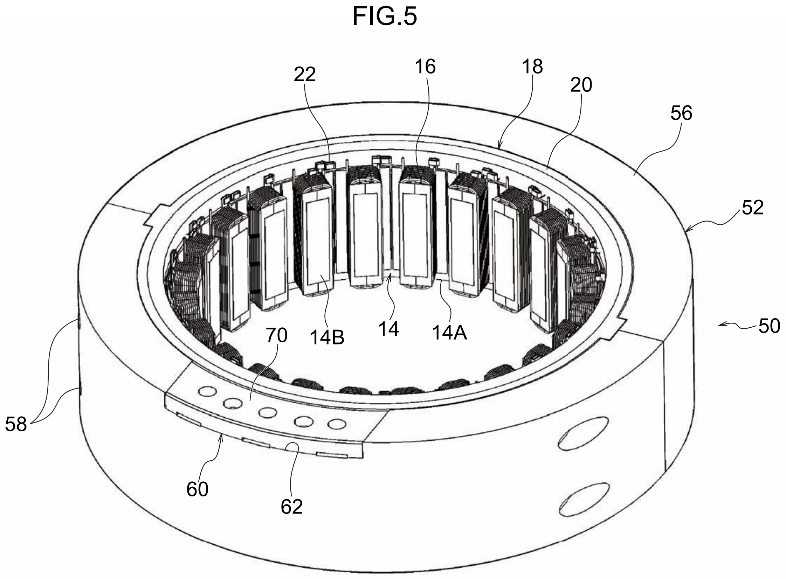

As illustrated in Figs. 4 and 5, the terminal positioning jig 50 can be attached to and detached from the lower mold 42 of the mold 40, as an example. The terminal positioning jig 50 includes a jig body 52 disposed (mounted) outside of the stator 12 in the radial direction, and a terminal pushing portion 70 that holds the plurality of terminal portions 24 of the stator 12 to the jig body 52. The jig body 52 is configured in a cylindrical shape by coupling a first half body 54 and a second half body 56 formed in a semicircular arc shape with metal, for example. The first half body 54 and the second half body 56 each have a shape obtained by dividing a cylinder in half. The first half body 54 and the second half body 56 are fastened using a plurality of bolts (not illustrated). In Figs. 4 and 5, the plurality of holes 58 formed in an outer peripheral surface of the first half body 54 are holes for inserting the bolts.

An inner diameter of the jig body 52 is set to be equal to an outer diameter of the stator 12, and dimensions of the jig body 52 in the axial direction are set to be equal to dimensions of the stator 12 in the axial direction. When the stator 12 is mounted on the jig body 52, the stator 12 is disposed between the first half body 54 and the second half body 56, and the first half body 54 and the second half body 56 are fastened with a plurality of bolts. This holds the stator 12 sandwiched in the radial direction by the first half body 54 and the second half body 56, and the jig body 52 and the stator 12 are concentrically disposed. In one configuration, the jig body 52 need not be divided into the first half body 54 and the second half body 56. In this case, when the stator 12 is mounted on the jig body 52, the stator 12 is configured to be inserted into the cylindrical jig body 52 in the axial direction.

On one end surface of the jig body 52 in the axial direction, a fitting recess 62 for fitting a terminal positioning portion 60 is formed in the first half body 54. The fitting recess 62 is formed in a central portion of the first half body 54 in the circumferential direction and has an arc shape when viewed from the axial direction of the jig body 52. An area of the first half body 54 where the fitting recess 62 is formed is recessed in the axial direction of the jig body 52. The fitting recess 62 configures a terminal positioning portion 60 together with the terminal pushing portion 70.

The terminal pushing portion 70 is formed in a long sheet shape with metal, for example. The terminal pushing portion 70 has an arc shape when viewed from the sheet thickness direction and can be fitted into the fitting recess 62 in the axial direction of the jig body 52 (that is, the axial direction of the stator 12). A thickness dimension of the terminal pushing portion 70 is set to be equal to a depth dimension of the fitting recess 62. In the terminal pushing portion 70, a plurality of (here, two) bolt insertion holes 72 is formed side by side in a longitudinal direction. The bolt insertion holes 72 are formed in a stepped shape. A plurality of (here, two) bolts 76 inserted into the bolt insertion holes 72 is screwed into a plurality of (here, two) female screw holes 64 formed in a bottom surface of the fitting recess 62, whereby the terminal pushing portion 70 is fastened and fixed to the jig body 52.

As illustrated in Figs. 4, 6, and 7, a plurality of (here, three) positioning recesses 66 is separately formed on the bottom surface of the fitting recesses 62. The plurality of positioning recesses 66 are recessed in the axial direction of the jig body 52, extend along the radial direction of the jig body 52, and are disposed side by side at equal intervals in the circumferential direction of the jig body 52. When the stator 12 is mounted on the jig body 52, the plurality of terminal portions 24 is inserted into the three positioning recesses 66.

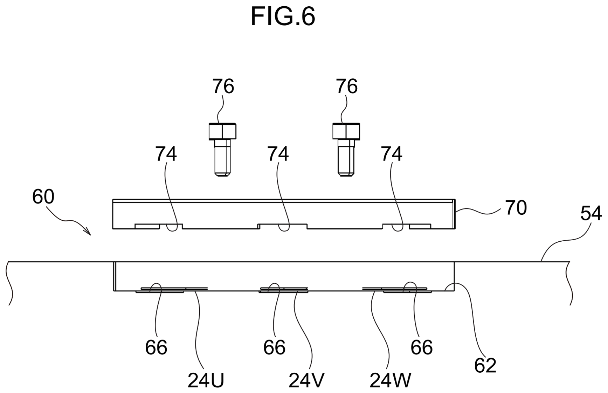

As illustrated in Fig. 6, a plurality of (here, three) positioning recesses 74 is formed on a lower surface of the terminal pushing portion 70 at areas facing the plurality of positioning recesses 66 in a one-to-one manner. The plurality of positioning recesses 66 and the plurality of positioning recesses 74 correspond to "recesses" in the disclosure. When the terminal pushing portion 70 is fitted into the fitting recess 62, the plurality of terminal portions 24 is inserted into the plurality of positioning recesses 74 in the axial direction. While the terminal pushing portion 70 is in a fastened and fixed state to the jig body 52, the plurality of terminal portions 24 is kept sandwiched between the terminal pushing portion 70 and the jig body 52 and comes into contact with the terminal pushing portion 70 and the jig body 52. In this state, displacement of the plurality of terminal portions 24 in the axial direction and the circumferential direction with respect to the jig body 52 (that is, the stator 12) is restricted by the plurality of positioning recesses 66 and the plurality of positioning recesses 74. However, the depth dimensions of the plurality of positioning recesses 66 and the plurality of positioning recesses 74 are set with a clearance such that the plurality of terminal portions 24 can be slightly displaced in the axial direction and the circumferential direction with respect to the jig body 52. This clearance is changed according to the required positional accuracy of the plurality of terminal portions 24.

A plurality of (here, three) pin insertion holes 68 communicating with the plurality of positioning recesses 66 are formed in the first half body 54 of the jig body 52. The plurality of pin insertion holes 68 pass through the first half body 54 in the axial direction of the jig body 52 and is disposed side by side in the circumferential direction of the jig body 52. When the terminal positioning jig 50 on which the stator 12 is mounted is attached to the lower mold 42 of the mold 40, the core portion 42B provided in the lower mold 42 is inserted inside the stator 12, the plurality of positioning pins 42C provided in the lower mold 42 is inserted into the plurality of pin insertion holes 68, and the terminal positioning jig 50 is placed on top of the base portion 42A of the lower mold 42. Each of tips of the plurality of positioning pins 42C is inserted into one of the bolt holes 26 of the plurality of terminal portions 24. This allows the plurality of terminal portions 24 to be precisely positioned with respect to the lower mold 42. In the configuration, resin molding is performed in this state by the stator molding device 10. When the resin molding is completed, the terminal positioning jig 50 is detached from the lower mold 42 together with the stator 12 by an ejector pin (not illustrated) provided in the lower mold 42.

Next, actions and effects of the present embodiment will be described.

In the stator molding device 10 having the above configuration, the stator 12 including the stator core 14, the coils 16, and the bus bar unit 18 is molded with resin. The stator molding device 10 includes the mold 40 having the lower mold 42 and the upper mold 44, and the terminal positioning jig 50 to be attached to the mold 40. The terminal positioning jig 50 has the terminal positioning portion 60 that comes into contact with the plurality of terminal portions 24 included in the bus bar unit 18 and positions the plurality of terminal portions 24 with respect to the mold 40.

As described above, since the terminal positioning portion 60 of the terminal positioning jig 50 to be attached to the mold 40 comes into direct contact with the plurality of terminal portions 24, it is easy to secure the positional accuracy of the plurality of terminal portions 24, as compared with a configuration in which the plurality of terminal portions 24 is positioned in the mold 40 via a resin component.

In the terminal positioning jig 50, the jig body 52 is disposed (mounted) outside the stator 12 in the radial direction, and the terminal pushing portion 70 is fixed to the jig body 52 in the axial direction of the stator 12. In the terminal positioning portion 60 included in the terminal positioning jig 50, since the plurality of terminal portions 24 is kept sandwiched between the jig body 52 and the terminal pushing portion 70, the plurality of terminal portions 24 can be positioned in the axial direction of the stator 12 with high accuracy.

The terminal positioning portion 60 includes the plurality of positioning recesses 66 formed in the jig body 52 and the plurality of positioning recesses 74 formed in the terminal pushing portion 70. The plurality of terminal portions 24 is inserted into the positioning recesses 66 and 74 in the axial direction of the stator 12. Accordingly, the plurality of terminal portions 24 can be positioned in the circumferential direction of the stator 12 with high accuracy.

In the present embodiment, since the terminal positioning jig 50 can be detached from the mold 40, for example, the stator 12 can be mounted on and removed from the terminal positioning jig 50, and so forth while the terminal positioning jig 50 is in a detached state from the mold 40, and the workability is improved. Since the stator 12 can be handled with the terminal positioning jig 50 put on the stator 12 before and after the resin molding, for example, a heat treatment step for finally curing the molded sealing resin 28 can also be performed while the plurality of terminal portions 24 is positioned by the terminal positioning jig 50.

In the above embodiment, the terminal positioning jig 50 is configured to be attachable to and detachable from the lower mold 42 of the mold 40. However, the embodiment is not limited thereto, and for example, the jig body 52 of the terminal positioning jig 50 may be configured to be integrally formed with the lower mold 42.

In the above embodiment, the plurality of positioning recesses 66 and 74 are configured to be formed in the jig body 52 and the terminal pushing portion 70, but in one configuration, one or both of the plurality of positioning recesses 66 and 74 need not be formed.

In the above embodiment, the terminal positioning jig 50 has a configuration including the jig body 52 and the terminal pushing portion 70, but the configuration of the terminal positioning jig 50 can be changed, if appropriate.

In addition, the disclosure can be variously changed and carried out without departing from the gist thereof. It is a matter of course that the scope of rights of the disclosure is not limited to the above embodiments.

The disclosure of Japanese Patent Application No. 2022-212375 filed on December 28, 2022 is incorporated herein by reference in its entirety. All documents, patent applications, and technical standards described in the present description are incorporated herein by reference to the same extent as if each individual document, patent application, and technical standard were specifically and individually described to be incorporated by reference.

## Claims

1. A terminal positioning jig to be attached to a mold for resin molding a stator that includes a stator core, a coil wound around a tooth of the stator core, and a bus bar unit including a plurality of bus bars electrically connected to the coil,
the terminal positioning jig comprising a terminal positioning portion that comes into contact with an external connection terminal included in the bus bar unit and that positions the external connection terminal with respect to the mold.

2. The terminal positioning jig according to claim 1, comprising:
a jig body that is disposed at a radial direction outer side with respect to the stator; and
a terminal pushing portion that is fixed to the jig body in an axial direction of the stator, wherein:
the terminal positioning portion is configured to sandwich the external connection terminal between the jig body and the terminal pushing portion.

3. The terminal positioning jig according to claim 1 or 2, wherein the terminal positioning portion is formed in at least one of the jig body or the terminal pushing portion and has a recess into which the external connection terminal is inserted in the axial direction of the stator.

4. The terminal positioning jig according to claim 1 or 2, wherein the terminal positioning jig is detachable from the mold.

5. A stator molding device for resin molding a stator that includes a stator core, a coil wound around a tooth of the stator core, and a bus bar unit configured by integrating, with a resin, a plurality of bus bars electrically connected to the coil, the stator molding device comprising:
a mold; and
the terminal positioning jig according to claim 1 or 2 to be attached to the mold.
